# EUROPÄISCHE PATENTSCHRIFT

(11) **EP 3 630 680 B1**
(45) Veröffentlichungstag und Bekanntmachung des Hinweises auf die Patenterteilung: **26.02.2025**
(21) Anmeldenummer: 18729081.2
(22) Anmeldetag: 30.05.2018
(51) Int. Cl.: C01B 21/26, C01B 21/28, C01B 21/40, G05D 21/00

(54) **VERFAHREN ZUR KATALYTISCHEN OXIDATION VON AMMONIAKGAS**
METHOD FOR THE CATALYTIC OXIDATION OF AMMONIA GAS
PROCÉDÉ D'OXYDATION CATALYTIQUE DE L'AMMONIAC

(30) Priorität: 01.06.2017 DE 102017209257
(43) Veröffentlichungstag der Anmeldung: 08.04.2020
(73) Patentinhaber: thyssenkrupp Uhde GmbH, 44141 Dortmund (DE); thyssenkrupp AG, 45143 Essen (DE)
(72) Erfinder: MATHIAK, Jens, 44579 Castrop-Rauxel (DE); GROVES, Michael, 58285 Gevelsberg (DE)
(74) Vertreter: thyssenkrupp Intellectual Property GmbH
(86) Internationale Anmeldenummer: PCT/EP2018/064189
(87) Internationale Veröffentlichungsnummer: WO 2018/220014

(56) Entgegenhaltungen:
- EP-A1- 3 210 939
- WO-A1-2009/054728
- DE-T2- 69 708 818
- KR-B1- 100 976 372

## Beschreibung

Die vorliegende Erfindung betrifft ein Verfahren zur katalytischen Oxidation von Ammoniakgas mittels eines sauerstoffhaltigen Gases in Gegenwart eines Katalysators zu Stickstoffmonoxid.

Bei der Herstellung von Salpetersäure nach dem Ostwald-Verfahren wird durch die Oxidation von Ammoniak in Luft-Sauerstoff oder in speziellen Fällen in anderen sauerstoffhaltigen Gemischen wie beispielsweise Wasserdampf und Sauerstoff oder mit Sauerstoff angereicherter Luft ein Gasgemisch gebildet, das Stickoxide, Wasserdampf, Sauerstoff und andere an den Folgereaktionen nicht beteiligten Stoffe, enthält. Die Stickoxide sind Stickstoffmonoxid (NO), Stickstoffdioxid (NO₂), Distickstoffoxid (N₂O), Distickstofftetroxid (N₂O₄) und Distickstofftrioxid (N₂O₃), die unter den entsprechenden Bedingungen bei Reaktion mit Wasser und ggf. Sauerstoff entstehen, wobei diese wässrige Lösungen von Salpetersäure (HNO₃) und salpetriger Säure bilden. Das bei der Ammoniakoxidation gebildete Gasgemisch ist zunächst heiß - typischerweise im Bereich von etwa 900°C - und wird in der Anlage durch Wärmeaustausch mit anderen Stoffströmen in geeigneten Apparaten abgekühlt.

Die WO 01/68520 A1 beschreibt beispielsweise typische herkömmliche Verfahren zur Herstellung von Salpetersäure durch Oxidation von Ammoniak mit Luftsauerstoff.

Die KR 100 976 372 B1 offenbart eine Regelung in einem Reaktor durch im Reaktor angeordnete Sensoren und Heizelemente.

Die DE 697 08 818 T2 offenbart ein Verfahren zur Herstellung von Salpetersäure. Dabei wird eine Regelung der Temperatur eines Gasgemisches über die Menge an beigemischtem Inertfluid realisiert.

Die WO 2009/054728 A1 offenbart einen Katalysator, der bei der Herstellung von Salpetersäure genutzt werden kann.

Bei der Salpetersäureherstellung wird also Ammoniak mit Luft in Gegenwart von Platinnetzen oder ähnlichen Katalysatoren wie beispielsweise Platin-Rhodium-Katalysatornetzen verbrannt. Dabei werden die Netze von einem Gasgemisch aus typischerweise etwa 9 - 12 Vol.-% NH₃ und Luft durchströmt, wobei sich an den Netzen durch die Exothermie der Oxidationsreaktion eine Temperatur von etwa 800 - 950°C einstellt. Dabei wird NH₃ sehr selektiv zu Stickstoffmonoxid (NO) oxidiert (A, Reaktionsschema I), welches dann im Laufe des weiteren Prozesses zu Stickstoffdioxid (NO₂) oxidiert wird (B, Reaktionsschema II) und schließlich mit Wasser in einer Absorptionsvorrichtung zu HNO₃ umgesetzt wird (C, Reaktionsschema III).

### A) Verbrennung von Ammoniak in einem Oxidationsreaktor unter Umsetzung von Ammoniak mit Sauerstoff zu Stickoxid

4 NH₃ + 5 O₂ → 4 NO + 6 H₂O (I)

Die Reaktionswärme dieses exothermen Schrittes beträgt etwa -226 kJ / mol NH3.

Im Salpetersäureprozess wird in Folge dieses Reaktionsschrittes also, bezogen auf das Endprodukt, eine Wärme von maximal 226 kJ/mol HNO₃ erzeugt.

Auch wenn demgemäß der in der Verbrennungsluft enthaltene O₂-Gehalt von 21 Vol.-% gerade ausreicht, um formal eine vollständige Überführung von 10 Vol.-% NH₃ in HNO₃ zu gewährleisten, wird bei der technischen Herstellung von HNO₃ dem Prozessgas nach der katalytischen NH₃-Oxidation und vor Eintritt in die Absorptionsvorrichtung weiterer Sauerstoff, insbesondere Luftsauerstoff (Sekundärluft) zugeführt, um die folgende NO-Oxidation zu NO₂ und damit Bildung von HNO₃ in der Absorptionsvorrichtung zu beschleunigen. Typischerweise beträgt der Restgehalt an Sauerstoff des die letzte Absorptionsvorrichtung verlassenden Abgases ca. 1- 5 Vol.-%.

### B) Oxidation von Stickstoffmonoxid zu Stickstoffdioxid

2 NO + O₂ → 2 NO₂ (II)

Die Reaktionsenthalpie dieses exothermen Schrittes ΔHᵣ° beträgt etwa 57,2 kJ / mol NO. Im Salpetersäureprozess wird in Folge dieses Reaktionsschrittes allerdings, da die Absorption von NO₂ in Wasser als Disproportionierung unter Rückbildung von NO abläuft (vgl. C) und NO reoxidiert werden muss, bezogen auf das Endprodukt eine Wärme von ca. 85 kJ/mol HNO₃ erzeugt.

Die Reaktion läuft im Salpetersäureprozess nach dem Ostwaldverfahren als nicht-katalysierte Gasphasenreaktion ab.

### C) Bildung von HNO₃ (Salpetersäure) durch Absorption von NO₂ in Wasser in den Kondensatoren und dem Absorptionsturm unter Rückbildung von NO

3 NO₂ + H₂O -> 2 HNO₃ + NO (III)

Die Reaktionswärme dieses exothermen Schrittes beträgt etwa -58 kJ / mol HNO₃.

Als Bruttoreaktion resultiert daraus:

NH₃ + 2 O₂ → HNO₃ + H₂O (IV)

Beim Verfahren zur Herstellung von Salpetersäure handelt es sich um einen großtechnischen Prozess. Die Verfahrensabläufe solcher Prozesse unterliegen einer ständigen Optimierung.

In der US 2,201,958 A wird ein Verfahren zur Herstellung von Salpetersäure beschrieben, bei dem man ein Gemisch aus Ammoniak und Luft zunächst durch einen Wärmetauscher leitet, um es vorzuwärmen, bevor dieses Gasgemisch in einen Ammoniakbrenner eingeleitet wird. Als Wärmemedium für dieses Vorwärmen des Reaktionsgasgemisches verwendet man Dampf, welchen man in einem Kessel durch Verdampfen von Wasser erzeugt, wobei man als Wärmequelle für diesen Verdampfungsvorgang die aus dem Ammoniakbrenner austretenden heißen Stickoxide einsetzt. Der durch Wärmetausch mit den heißen Stickoxiden in dem Kessel erzeugte heiße Dampf wird in eine Dampftrommel eingeleitet und strömt in dieser Dampftrommel im Gegenstrom zu dem Gasgemisch aus Ammoniak und Luft.

In der Patentschrift DE 622 726 A wird ein Verfahren zur vollständigen oder nahezu vollständigen Rückgewinnung der Kompressionsarbeit bei der Herstellung von Salpetersäure unter Druck beschrieben. Bei diesem Verfahren wird Luft auf einen erforderlichen Betriebsdruck von 8 bar komprimiert, in die Luftleitung wird über eine Dosierpumpe flüssiges Ammoniak eingespritzt und das komprimierte Ammoniak-Luft-Gemisch wird dann durch einen Wärmetauscher geleitet, um es auf eine Temperatur von 330 °C vorzuwärmen. Anschließend erfolgt die Oxidationsreaktion in einem Reaktor unter Bildung von Stickoxiden und die heißen Stickoxide werden durch den Wärmetauscher geleitet, um das Ammoniak-Luft-Gemisch vorzuwärmen.

Die Aufgabe der vorliegenden Erfindung ist es, bei einem Verfahren zur katalytischen Oxidation von Ammoniakgas, welches einen ersten Teilschritt bei der Herstellung von Salpetersäure bildet, die Effizienz zu verbessern, die Ausbeute an Verfahrensprodukt zu erhöhen und die Anlagenkosten zu verringern.

Die Lösung der vorgenannten Aufgabe liefert ein Verfahren der eingangs genannten Art mit den Merkmalen des Anspruchs 1.

Erfindungsgemäß ist vorgesehen, dass eine Beeinflussung der Reaktionstemperatur am Katalysator auf einen im Hinblick auf die Stickstoffmonoxid-Selektivität der Reaktion optimalen Wert erfolgt, wobei diese Beeinflussung über Maßnahmen stromaufwärts des Oxidationsreaktors erfolgt. Mit anderen Worten, gemäß der Erfindung wird auf Parameter eingewirkt, die das Prozessgasgemisch, bevor es in den Oxidationsreaktor gelangt, in seiner Zusammensetzung oder Temperatur so verändern, dass dies zu einer erhöhten Reaktionstemperatur am Katalysator im Oxidationsreaktor führt.

Bislang verwendet man hingegen bei der katalytischen Oxidation von Ammoniakgas als Einflussgröße das Ammoniak-Luft-Verhältnis zur Einstellung der thermodynamisch optimalen Zusammensetzung des Prozessgasgemisches und zur Regelung der optimalen Temperatur für die katalytische Reaktion. Die vorliegende Erfindung empfiehlt hingegen, eine von der genannten Einflussgröße unabhängige Regelung der Temperatur vorzusehen.

Eine genauere Betrachtung des Vorgangs der katalytischen NH₃-Oxidation gemäß der obigen Reaktionsgleichung (I) führte zu der Erkenntnis, dass die optimale Fahrweise eines NH₃-Brenners in einer HNO₃-Anlage nicht durch die Haltung einer konstanten Netztemperatur des Katalysatornetzes durch automatische Einstellung des NH₃ : Luft Verhältnisses zu erreichen ist. Vielmehr gibt es eine optimale Temperatur für jede Fahrbedingung, die nicht durch Veränderung des NH₃ : Luft-Verhältnisses eingestellt werden sollte, sondern durch Anpassung der Reaktionstemperatur.

Eine bevorzugte Weiterbildung der erfindungsgemäßen Aufgabenlösung sieht vor, dass die Luft und/oder das Ammoniak-Luft-Mischgas vor dem Kontakt mit dem Katalysator indirekt beheizt oder gekühlt werden.

Vorzugsweise ist eine indirekte Beheizung der Luft und/oder das Ammoniak-Luft-Mischgases mittels Dampf oder eines anderen Wärmeüberträgers, insbesondere mittels Restgas und/oder Sekundärluft und/oder elektrischem Strom vorgesehen.

Beispielsweise kann gemäß einer möglichen Variante der Erfindung eine indirekte Beheizung der Prozessluft über eine in einer Primärluftleitung installierte Heizung vorgesehen sein.

Eine bevorzugte Weiterbildung der Erfindung sieht vor, dass die katalytische Oxidation in einer Anlage umfassend einen Prozessluftverdichter mit einem Zwischenkühler erfolgt, wobei ein geregelter prozessluftseitiger Bypass um den Zwischenkühler zur Einstellung der Austrittstemperatur der aus dem Prozessluftverdichter austretenden Luft vorgesehen ist.

Erfindungsgemäß wird die Luft und/oder das Ammoniak-Luft-Mischgas vor dem Kontakt mit dem Katalysator direkt beheizt oder gekühlt. Beispielsweise kann die katalytische Oxidation in einer Anlage umfassend einen Prozessluftverdichter erfolgen und der Prozessluftstrom kann vor oder nach dem Prozessluftverdichter mit mindestens einem heißen und/oder mindestens einem kalten Medium vermischt werden.

Eine Vermischung des heißen oder kalten Mediums kann beispielsweise mit dem Gesamtluftstrom oder nur mit der Primärluft erfolgen.

Gemäß einer Weiterbildung dieser Variante des erfindungsgemäßen Verfahrens mit direkter Beheizung wird zum Beispiel als kaltes Medium demineralisiertes Wasser und/oder flüssiger Stickstoff und/oder Kaltwasser, insbesondere aus der NH₃-Verdampfung verwendet.

Gemäß einer möglichen Variante der Erfindung kann beispielsweise eine Aufheizung durch Beimischung von Wasserdampf stromaufwärts des Prozessluftverdichters vorgesehen sein.

Alternativ dazu kann auch beispielsweise eine Aufheizung oder Abkühlung des Ammoniak-Luft-Mischgases durch Beimischung von Wasserdampf stromabwärts des Prozessluftverdichters vorgesehen sein. Wenn Wasserdampf vor dem Prozessluftverdichter zugemischt wird, handelt es sich um eine Aufheizung, wenn aber nach dem Prozessluftverdichter beigemischt wird, wird das gemischte Gas (Luft und Medium) heißer oder kälter als das Prozessgas vor der Mischung in Abhängigkeit davon, ob der Dampf heißer oder kälter als die Prozessluft ist.

Bei Verwendung von demineralisiertem Wasser als direktes Kühlmittel für das Ammoniak-Luft-Gemisch, ist es ratsam, besondere Vorkehrungen gegen Mitriss von flüssigen Wassertropfen auf die Katalysatorbrennernetze zu treffen.

Erfindungsgemäße ist eine Erwärmung der Luft und/oder des Ammoniak-Luft-Mischgases vor dem Kontakt mit dem Katalysator vorgesehen, wobei die Verwendung eines Brenngases, insbesondere die Verwendung von Wasserstoff als Brenngas, zur Erhöhung der Brennertemperatur in Betracht kommt. Dabei ist es entweder so, dass die Zufuhr eines Brenngases in den Luftstrom im Bereich der Leitung stromaufwärts der Ammoniakzugabe unter Verbrennung dieses Brenngases erfolgt, oder aber es erfolgt eine Zufuhr eines Brenngases oder eines die Temperatur der Reaktion am Katalysator beeinflussenden Mediums stromabwärts der Zugabe von Ammoniak, wobei die Verbrennung dieses Brenngases am Katalysator im Ammoniakbrenner erfolgt.

Die vorgenannte Zufuhr eines Brenngases oder eines die Temperatur der Reaktion am Katalysator beeinflussenden Mediums ist somit nach Maßgabe der obigen Ausführungen stromabwärts der Zugabe von Ammoniak vorgesehen, wobei zusätzlich die Zufuhr eines Brenngases oder eines die Temperatur der Reaktion am Katalysator beeinflussenden Mediums stromaufwärts der Zugabe von Ammoniak vorgesehen sein kann, so dass eine solche Zugabe eines Brenngases sowohl stromaufwärts als auch stromabwärts der Zugabe von Ammoniak erfolgt.

Gemäß einer bevorzugten Weiterbildung der Erfindung kann beispielsweise auch eine erste Zufuhr eines Brenngases oder eines die Temperatur der Reaktion am Katalysator beeinflussenden Mediums stromaufwärts der Zugabe von Ammoniak vorgesehen sein und eine weitere Zufuhr eines Brenngases oder eines die Temperatur der Reaktion am Katalysator beeinflussenden Mediums stromabwärts der Zugabe von Ammoniak. Bei dieser Variante hat man die Möglichkeit an zwei unterschiedlichen Stellen im System eine Beeinflussung der Temperatur am Katalysator im Oxidationsreaktor vorzunehmen.

Eine andere Weiterbildung der Erfindung sieht zusätzlich zu der Zufuhr stromabwärts der Zugabe von Ammoniak auch ein indirektes Heizen oder Kühlen der Luft vor der Zugabe von Ammoniak mittels eines ersten indirekten Wärmeüberträgers vor und/oder ein indirektes Heizen oder Kühlen des Ammoniak-Luft-Mischgases nach der Zugabe von Ammoniak mittels eines zweiten Wärmeüberträgers. Auch bei dieser Variante besteht die Möglichkeit an zwei weiteren unterschiedlichen Stellen im System eine Beeinflussung der Temperatur am Katalysator im Oxidationsreaktor vorzunehmen.

Eine andere bevorzugte Weiterbildung der Erfindung sieht vor, dass die katalytische Oxidation in einer Anlage umfassend einen Prozessluftverdichter erfolgt und eine Änderung der Temperatur der Verbrennungsluft über die Änderung mindestens eines Einstellungsparameters des Prozessluftverdichters vorgesehen ist, bevorzugt über eine Änderung der Einstellung der Schaufeln des Prozessluftverdichters. Durch Änderung der Effizienz des Prozessluftverdichters kann so eine Temperaturänderung der Verbrennungsluft erzielt werden. Dies wiederum führt letztlich zu einer Einstellung der Netztemperatur des Katalysatornetzes. Eine optimierte Fahrweise der Anlage kann so über Einstellungen im Bereich des Prozessluftverdichters erfolgen.

Eine alternative Variante des Verfahrens gemäß einer Weiterbildung der Erfindung sieht die Regelung der Temperatur des Katalysatornetzes vor. Dazu kann man beispielsweise den Sollwert der Temperatur des Katalysatornetzes in Abhängigkeit von wenigstens einem Modellparameter ermitteln, wobei insbesondere die NH₃-Konzentration und/oder die Anlagenlast und/oder der Brennerdruck als Modellparameter gewählt werden, wobei ein Regelkreis verwendet wird, um die Zufuhrmenge des Heiz- oder Kühlmediums einzustellen und/oder die Einstellung des Prozessluftverdichters zu justieren.

Vorzugsweise wird bei der vorgenannten Variante eine Kaskadenregelung verwendet, wobei der Ausgang eines Temperaturreglers für die Temperatur des Katalysatornetzes den Sollwert für einen Durchflussregler des Heiz- und/oder Kühlmediums liefern kann.

Eine alternative Möglichkeit zur Regelung der Temperatur des Katalysatornetzes besteht beispielsweise darin, über Anlagendaten sowie theoretische Ansätze ein Modell erstellt wird für das Verhalten der Anlage in Bezug auf Variationen der Heizmittelmengen und/oder Kühlmittelmengen und/oder Änderungen der Einstellungen des Prozessluftverdichters, wobei eine feed-forward Regelung mit feedback trim verwendet wird. Bei dieser Variante des Verfahrens sollte der Regler nach Möglichkeit schneller reagieren als mit konventioneller Regelstrategie.

Gegenstand der vorliegenden Erfindung ist weiterhin eine Einrichtung zur Durchführung eines Verfahrens zur katalytischen Oxidation von Ammoniakgas mittels eines sauerstoffhaltigen Gases, insbesondere mittels Luft, in Gegenwart eines Katalysators zu Stickstoffmonoxid, vorzugsweise zur Durchführung des zuvor beschriebenen Verfahrens, wobei erfindungsgemäß diese Einrichtung Mittel zur Einstellung der Temperatur eines Ammoniak-Luft-Mischgases vor dem Kontakt mit dem Katalysator umfasst.

Geeignete Katalysatoren für die katalytische Oxidation von Ammoniakgas sind dem Fachmann bekannt und werden daher hier nicht im Detail aufgezählt. Beispielsweise werden in der Technik Platin-RhodiumKatalysatoren verwendet.

Erfindungsgemäß umfasst die erfindungsgemäße Einrichtung wenigstens eine Heizvorrichtung und/oder wenigstens eine Kühlvorrichtung für die Luft und/oder das Ammoniak-Luft-Mischgas stromaufwärts des Katalysators.

Eine bevorzugte Weiterbildung der Erfindung sieht vor, dass als Heizvorrichtung eine in einer Primärluftleitung installierte Heizung vorgesehen ist, zur indirekten Beheizung der Prozessluft.

Gemäß einer weiteren bevorzugten Weiterbildung der Erfindung weist die Einrichtung einen Prozessluftverdichter mit einem Zwischenkühler auf, wobei ein geregelter prozessluftseitiger Bypass um den Zwischenkühler zur Einstellung der Austrittstemperatur der aus dem Prozessluftverdichter austretenden Luft vorgesehen ist.

Gemäß einer weiteren bevorzugten Weiterbildung der erfindungsgemäßen Einrichtung umfasst diese Mittel für eine Aufheizung oder Abkühlung des Ammoniak-Luft-Mischgases durch Beimischung von Wasserdampf stromaufwärts und/oder stromabwärts des Prozessluftverdichters.

Erfindungsgemäß ist vorgesehen, dass die Einrichtung Mittel für eine Zufuhr eines Brenngases umfasst, insbesondere für eine Zufuhr von Wasserstoff als Brenngas, zur Erhöhung der Brennertemperatur und Erwärmung der Luft und/oder des Ammoniak-Luft-Mischgases vor dem Kontakt mit dem Katalysator.

Eine bevorzugte Weiterbildung der Erfindung sieht vor, dass die Einrichtung wenigstens einen Regelkreis umfasst, um die Zufuhrmenge des Heiz- und/oder Kühlmediums zu der Heiz- oder Kühlvorrichtung einzustellen und/oder die Einstellung des Prozessluftverdichters zu justieren.

Beispielsweise umfasst der Regelkreis eine Kaskadenregelung, wobei ein Temperaturregler zur Erfassung der Temperatur des Katalysatornetzes vorgesehen ist, welcher in Wirkverbindung steht mit einem Durchflussregler für das Heiz- und/oder Kühlmedium.

Mögliche Ausgestaltungen der vorliegenden Erfindung die folgenden mit römischen Ziffern I bis XXV bezeichneten Ausführungsformen:
I Ein Verfahren zur katalytischen Oxidation von Ammoniakgas mittels eines sauerstoffhaltigen Gases, insbesondere mittels Luft, in Gegenwart eines Katalysators zu Stickstoffmonoxid in einem Oxidationsreaktor, wobei eine Beeinflussung der Reaktionstemperatur am Katalysator auf einen im Hinblick auf die Stickstoffmonoxid-Selektivität der Reaktion optimalen Wert vorgesehen ist, wobei diese Beeinflussung über Maßnahmen stromaufwärts des Oxidationsreaktors erfolgt, wobei die Luft und/oder das Ammoniak-Luft-Mischgas vor dem Kontakt mit dem Katalysator direkt beheizt oder gekühlt werden und wobei eine Zufuhr eines Brenngases oder eines die Temperatur der Reaktion am Katalysator beeinflussenden Mediums stromabwärts der Zugabe von Ammoniak vorgesehen ist, wobei die Verbrennung dieses Brenngases am Katalysator im Ammoniakbrenner erfolgt;
II ein Verfahren nach Ausführungsform I, wobei die Luft und/oder das Ammoniak-Luft-Mischgas, insbesondere das Ammoniak-Luft-Gemisch, vor dem Kontakt mit dem Katalysator indirekt beheizt oder gekühlt werden;
III ein Verfahren nach Ausführungsform II, wobei eine indirekte Beheizung der Luft und/oder das Ammoniak-Luft-Mischgases mittels Dampf oder eines anderen Wärmeüberträgers, insbesondere mittels Restgas und/oder Sekundärluft und/oder elektrischem Strom vorgesehen ist;
IV ein Verfahren nach einer der Ausführungsformen II oder III, wobei die katalytische Oxidation in einer Anlage umfassend einen Prozessluftverdichter mit einem Zwischenkühler erfolgt, wobei ein geregelter prozessluftseitiger Bypass um den Zwischenkühler zur Einstellung der Austrittstemperatur der aus dem Prozessluftverdichter austretenden Luft vorgesehen ist;
V ein Verfahren nach Ausführungsform IV, wobei die katalytische Oxidation in einer Anlage umfassend einen Prozessluftverdichter erfolgt und der Prozessluftstrom vor oder nach dem Prozessluftverdichter mit mindestens einem heißen und/oder mindestens einem kalten Medium vermischt wird;
VI ein Verfahren nach Ausführungsform V, wobei als kaltes Medium demineralisiertes Wasser und/oder flüssiger Stickstoff und/oder Kaltwasser, insbesondere aus der NH₃-Verdampfung verwendet wird;
VII ein Verfahren nach einer der Ausführungsformen V oder VI, wobei eine Vermischung des heißen oder kalten Mediums mit dem Gesamtluftstrom oder nur mit der Primärluft vorgesehen ist;
VII ein Verfahren nach einer der Ausführungsformen V bis VII, wobei eine Aufheizung durch Beimischung von Wasserdampf stromaufwärts des Prozessluftverdichters vorgesehen ist;
IX ein Verfahren nach einer der Ausführungsformen V bis VIII, wobei eine Aufheizung oder Abkühlung des Ammoniak-Luft-Mischgases durch Beimischung von Wasserdampf stromabwärts des Prozessluftverdichters vorgesehen ist;
X ein Verfahren nach einer der Ausführungsformen IV bis IX, wobei eine Erwärmung der Luft und/oder des Ammoniak-Luft-Mischgases vor dem Kontakt mit dem Katalysator erfolgt, wobei die Verwendung eines Brenngases, insbesondere Verwendung von Wasserstoff als Brenngas, zur Erhöhung der Brennertemperatur vorgesehen ist, wobei die Zufuhr eines Brenngases in den Luftstrom im Bereich der Leitung stromaufwärts der Ammoniakzugabe unter Verbrennung dieses Brenngases erfolgt;
XI ein Verfahren nach Ausführungsform X, wobei eine erste Zufuhr eines Brenngases oder eines die Temperatur der Reaktion am Katalysator beeinflussenden Mediums stromaufwärts der Zugabe von Ammoniak und eine weitere Zufuhr eines Brenngases oder eines die Temperatur der Reaktion am Katalysator beeinflussenden Mediums stromabwärts der Zugabe von Ammoniak vorgesehen ist;
XII ein Verfahren nach einer der Ausführungsformen II bis XI, wobei ein indirektes Heizen oder Kühlen der Luft vor der Zugabe von Ammoniak mittels eines ersten indirekten Wärmeüberträgers vorgesehen ist und/oder ein indirektes Heizen oder Kühlen des Ammoniak-Luft-Mischgases nach der Zugabe von Ammoniak mittels eines zweiten Wärmeüberträgers vorgesehen ist;
XIII ein Verfahren nach einer der Ausführungsformen I bis XII, wobei die katalytische Oxidation in einer Anlage umfassend einen Prozessluftverdichter erfolgt und eine Änderung der Temperatur der Verbrennungsluft über die Änderung mindestens eines Einstellungsparameters des Prozessluftverdichters vorgesehen ist, bevorzugt über eine Änderung der Einstellung der Schaufeln des Prozessluftverdichters;
XIV ein Verfahren nach einer der Ausführungsformen I bis XIII, wobei der Sollwert der Temperatur des Katalysatornetzes in Abhängigkeit von wenigstens einem Modellparameter ermittelt wird, wobei insbesondere die NH₃-Konzentration und/oder die Anlagenlast und/oder der Brennerdruck als Modellparameter gewählt wird, wobei ein Regelkreis verwendet wird, um die Zufuhrmenge des Heiz- oder Kühlmediums einzustellen und/oder die Einstellung des Prozessluftverdichters zu justieren;
XV Verfahren nach Ausführungsform XIV, wobei eine Kaskadenregelung verwendet wird, wobei der Ausgang eines Temperaturreglers für die Temperatur des Katalysatornetzes den Sollwert für einen Durchflussregler des Heiz- und/oder Kühlmediums liefert; und
XVI ein Verfahren nach einer der Ausführungsformen XIV oder XV, wobei über Anlagendaten sowie theoretische Ansätze ein Modell erstellt wird für das Verhalten der Anlage in Bezug auf Variationen der Heizmittelmengen und/oder Kühlmittelmengen und/oder Änderungen der Einstellungen des Prozessluftverdichters, wobei eine feed-forward Regelung mit feedback trim verwendet wird; sowie ferner
XVII eine Einrichtung zur Durchführung eines Verfahrens zur katalytischen Oxidation von Ammoniakgas mittels eines sauerstoffhaltigen Gases, insbesondere mittels Luft, in Gegenwart eines Katalysators zu Stickstoffmonoxid, vorzugsweise zur Durchführung des Verfahrens gemäß einer der Ausführungsformen I bis XVI, wobei diese Einrichtung Mittel zur Einstellung der Temperatur eines Ammoniak-Luft-Mischgases vor dem Kontakt mit dem Katalysator umfasst, wobei diese wenigstens eine Heizvorrichtung und/oder wenigstens eine Kühlvorrichtung für die Luft und/oder das Ammoniak-Luft-Mischgas stromaufwärts des Katalysators umfasst und wobei diese Mittel für eine Zufuhr eines Brenngases, insbesondere für eine Zufuhr von Wasserstoff als Brenngas, zur Erhöhung der Brennertemperatur und Erwärmung der Luft und/oder des Ammoniak-Luft-Mischgases vor dem Kontakt mit dem Katalysator umfasst;
XVIII eine Einrichtung nach Ausführungsform XVII, wobei als Heizvorrichtung eine in einer Primärluftleitung installierte Heizung vorgesehen ist, zur indirekten Beheizung der Prozessluft;
XIX eine Einrichtung nach einer der Ausführungsformen XVII oder XVIII, wobei diese einen Prozessluftverdichter mit einem Zwischenkühler umfasst, wobei ein geregelter prozessluftseitiger Bypass um den Zwischenkühler zur Einstellung der Austrittstemperatur der aus dem Prozessluftverdichter austretenden Luft vorgesehen ist;
XX eine Einrichtung nach einer der Ausführungsformen XVII bis XIX, wobei diese Mittel für eine Aufheizung oder Abkühlung des Ammoniak-Luft-Mischgases durch Beimischung von Wasserdampf stromaufwärts und/oder stromabwärts des Prozessluftverdichters umfasst;
XXI eine Einrichtung nach einer der Ausführungsformen XVII bis XX, wobei diese wenigstens einen Regelkreis umfasst, um die Zufuhrmenge des Heiz- und/oder Kühlmediums zu der Heiz- oder Kühlvorrichtung einzustellen und/oder die Einstellung des Prozessluftverdichters zu justieren; und
XXII eine Einrichtung nach Ausführungsform XXI, wobei der Regelkreis eine Kaskadenregelung umfasst, wobei ein Temperaturregler zur Erfassung der Temperatur des Katalysatornetzes vorgesehen ist, welcher in Wirkverbindung steht mit einem Durchflussregler für das Heiz- und/oder Kühlmedium.

In bevorzugten Ausgestaltungen der vorliegenden Erfindung ist unter dem Begriff "Beeinflussung" insbesondere eine "Regelung" zu verstehen, also eine gezielte Steuerung der Reaktionstemperatur und keine zufällige Einflussnahme. In diesen bevorzugten Ausgestaltungen der vorliegenden Erfindung kann die Formulierung "Beeinflussung der Reaktionstemperatur am Katalysator" durch die Formulierung "Regelung der Reaktionstemperatur am Katalysator" ersetzt werden. Dies gilt sowohl für die erfindungsgemäßen Verfahren als auch für die erfindungsgemäßen Einrichtungen, wobei in letzteren statt "Mittel zur Einstellung der Temperatur" entsprechend "Mittel zur Reglung der Temperatur" vorhanden sind.

Insbesondere in diesen Ausgestaltungen wir die Temperatur am Katalysatornetz gemessen und ausgehend von diesen Messwerten werden dann andere Prozessparameter, wie sie in den Unteransprüchen dargestellt sind geregelt, so dass die Reaktionstemperatur am Katalysator möglichst nahe am Zielwert gehalten wird.

Dadurch wird zielgerecht ermöglicht, dass die ideale Reaktionstemperatur am Katalysator aufrechterhalten und eine optimale Reaktionsführung erreicht wird.

In einer Variante betrifft die vorliegende Erfindung ein Verfahren zur katalytischen Oxidation von Ammoniakgas mittels eines sauerstoffhaltigen Gases, insbesondere mittels Luft, in Gegenwart eines Katalysators zu Stickstoffmonoxid in einem Oxidationsreaktor, wobei eine Regelung der Reaktionstemperatur am Katalysator auf einen im Hinblick auf die Stickstoffmonoxid-Selektivität der Reaktion optimalen Wert vorgesehen ist, diese Regelung über Maßnahmen stromaufwärts des Oxidationsreaktors erfolgt, wobei das Ammoniak-Luft-Mischgas vor dem Kontakt mit dem Katalysator indirekt beheizt oder gekühlt wird.

In einer weiteren Variante erfolgt die Regelung explizit unter Verzicht auf eine Sättigung von Ammoniak mit Wasserdampf.

Nachfolgend wird die vorliegende Erfindung anhand eines Ausführungsbeispiels unter Bezugnahme auf die beiliegende Zeichnung näher erläutert. Dabei zeigt:

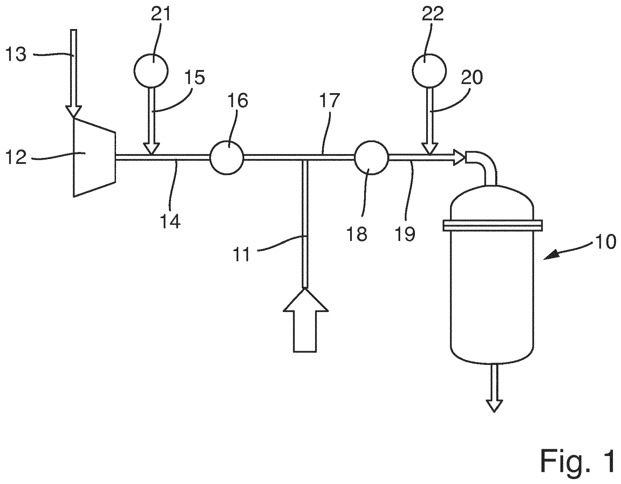

Figur 1 eine schematisch vereinfachte Darstellung einer beispielhaften erfindungsgemäßen Einrichtung.

Nachfolgend wird unter Bezugnahme auf Figur 1 ein Ausführungsbeispiel der vorliegenden Erfindung näher erläutert. Die Darstellung zeigt schematisch stark vereinfacht die im Rahmen der vorliegenden Erfindung wesentlichen Elemente einer Anlage zur katalytischen Oxidation von Ammoniakgas. Die Anlage umfasst einen Ammoniakbrenner 10, eine Leitung 11 für die Zuführung von Ammoniak in das Leitungssystem sowie einen Kompressor 12, dem Prozessluft über eine Leitung 15 zugeführt wird, die mittels des Kompressors 12 auf einen vorgesehenen Druck verdichtet wird. Die komprimierte Prozessluft strömt über eine vom Kompressor 12 ausgehende Leitung 14, der über die Leitung 15 ein Brenngas 21 wie beispielsweise Erdgas zugeführt werden kann, zunächst zu einem indirekten Wärmeüberträger 16, in dem eine erste Regelung der Temperatur des Prozessgasgemisches erfolgen kann und zwar in dem Ausführungsbeispiel vor der Zugabe von Ammoniak über die Leitung 11 zu dem Prozessgasgemisch aus Luft und Brenngas. Durch das bei 15 zugeführte Brenngas 21 kann eine Verbrennung erfolgen, oder es werden bei 15 Medien zugeführt, die eine Temperaturbeeinflussung des Prozessgasgemisches ermöglichen.

Nach der Zugabe von Ammoniakgas über die Leitung 11 strömt das Prozessgasgemisch über die Leitung 17 durch einen weiteren indirekten Wärmeüberträger 18, in dem eine zweite Regelung der Temperatur des Prozessgasgemisches erfolgen kann. Anschließend wird das Prozessgasgemisch über die Leitung 19 dem Ammoniakbrenner 10 zugeführt, wobei erfindungsgemäß jedoch zuvor über die Leitung 20 eine Zuführung eines weiteren Brenngases 22, wie beispielsweise Wasserstoff, vorgesehen ist, um die Oxidation des Ammoniak/Luft-Gemisches am Katalysator zu fördern. Alternativ können über die Leitung 20 auch Medien zugeführt werden, die eine Beeinflussung der Temperatur des Prozessgasgemisches ermöglichen.

Somit ermöglicht das Verfahren gemäß der vorliegenden Erfindung eine Einstellung der Reaktionstemperatur des Prozessgasgemisches am Katalysator im Ammoniakbrenner auf vorgesehene optimierte Werte an mehreren Punkten, nämlich zum einen über eine Veränderung der Lufttemperatur am Kompressor 12. Erfindungsgemäß wird die Temperatur durch die Zugabe von Brenngas oder anderer geeigneter Medien über die Leitung 20 beeinflusst. Eine Möglichkeit zur Beeinflussung der Temperatur ergibt sich auch durch die Zugabe eines Brenngases über die Leitung 15 stromaufwärts des ersten indirekten Wärmeüberträgers 16 und stromaufwärts des Ammoniakbrenners 10. Eine zusätzliche optionale Möglichkeit zur Beeinflussung der Temperatur ergibt sich durch Verwendung eines indirekten Wärmeüberträgers 16 stromaufwärts der Zugabe von Ammoniak. Eine zusätzliche optionale Möglichkeit zur Beeinflussung der Temperatur besteht durch Verwendung eines weiteren indirekten Wärmeüberträgers 18 stromabwärts der Zugabe von Ammoniak.

### Bezugszeichenliste

- 10: Ammoniakbrenner
- 11: Leitung für die Zugabe von Ammoniak
- 12: Kompressor für Prozessluft
- 15: Leitung für die Zugabe von Luft
- 14: Leitung für Prozessgasgemisch
- 15: Leitung für die Zugabe eines Brenngases
- 16: erster indirekter Wärmeüberträger
- 17: Leitung für Prozessgasgemisch
- 18: zweiter indirekter Wärmeüberträger
- 19: Leitung für Prozessgasgemisch
- 20: Leitung für die Zugabe von Brenngas
- 21: Brenngas
- 22: weiteres Brenngas

## Patentansprüche

1. Verfahren zur katalytischen Oxidation von Ammoniakgas mittels eines sauerstoffhaltigen Gases, insbesondere mittels Luft, in Gegenwart eines Katalysators zu Stickstoffmonoxid in einem Oxidationsreaktor, **wobei** eine Regelung der Reaktionstemperatur am Katalysator auf einen im Hinblick auf die Stickstoffmonoxid-Selektivität der Reaktion optimalen Wert vorgesehen ist, wobei diese Regelung über Maßnahmen stromaufwärts des Oxidationsreaktors erfolgt, **dadurch gekennzeichnet, dass** die Luft und/oder das Ammoniak-Luft-Mischgas vor dem Kontakt mit dem Katalysator direkt beheizt oder gekühlt werden und dass eine Zufuhr eines Brenngases (20, 22) oder eines die Temperatur der Reaktion am Katalysator beeinflussenden Mediums stromabwärts der Zugabe von Ammoniak (11) vorgesehen ist, wobei die Verbrennung dieses Brenngases (20, 22) am Katalysator im Ammoniakbrenner (10) erfolgt.

2. Verfahren nach Anspruch 2, **dadurch gekennzeichnet, dass** das die Luft und/oder das Ammoniak-Luft-Mischgas vor dem Kontakt mit dem Katalysator indirekt beheizt oder gekühlt werden.

3. Verfahren nach Anspruch 2, **dadurch gekennzeichnet, dass** eine indirekte Beheizung der Luft und/oder das Ammoniak-Luft-Mischgases mittels Dampf oder eines anderen Wärmeüberträgers, insbesondere mittels Restgas und/oder Sekundärluft und/oder elektrischem Strom vorgesehen ist.

4. Verfahren nach einem der Ansprüche 2 oder 3, **dadurch gekennzeichnet, dass** die katalytische Oxidation in einer Anlage umfassend einen Prozessluftverdichter mit einem Zwischenkühler erfolgt, wobei ein geregelter prozessluftseitiger Bypass um den Zwischenkühler zur Einstellung der Austrittstemperatur der aus dem Prozessluftverdichter austretenden Luft vorgesehen ist.

5. Verfahren nach Anspruch 4, **dadurch gekennzeichnet, dass** die katalytische Oxidation in einer Anlage umfassend einen Prozessluftverdichter (12) erfolgt und der Prozessluftstrom vor oder nach dem Prozessluftverdichter mit mindestens einem heißen und/oder mindestens einem kalten Medium vermischt wird.

6. Verfahren nach Anspruch 5, **dadurch gekennzeichnet, dass** als kaltes Medium demineralisiertes Wasser und/oder flüssiger Stickstoff und/oder Kaltwasser, insbesondere aus der NH₃-Verdampfung verwendet wird.

7. Verfahren nach einem der Ansprüche 5 oder 6, **dadurch gekennzeichnet, dass** eine Vermischung des heißen oder kalten Mediums mit dem Gesamtluftstrom oder nur mit der Primärluft vorgesehen ist.

8. Verfahren nach einem der Ansprüche 5 bis 7, **dadurch gekennzeichnet, dass** eine Aufheizung durch Beimischung von Wasserdampf stromaufwärts des Prozessluftverdichters (12) vorgesehen ist.

9. Verfahren nach einem der Ansprüche 5 bis 8, **dadurch gekennzeichnet, dass** eine Aufheizung oder Abkühlung des Ammoniak-Luft-Mischgases durch Beimischung von Wasserdampf stromabwärts des Prozessluftverdichters (12) vorgesehen ist.

10. Verfahren nach einem der Ansprüche 4 bis 9, **dadurch gekennzeichnet, dass** eine Erwärmung der Luft und/oder des Ammoniak-Luft-Mischgases vor dem Kontakt mit dem Katalysator erfolgt, wobei die Verwendung eines Brenngases (15, 21), insbesondere Verwendung von Wasserstoff als Brenngas, zur Erhöhung der Brennertemperatur vorgesehen ist, wobei die Zufuhr eines Brenngases (15, 21) in den Luftstrom im Bereich der Leitung (14) stromaufwärts der Ammoniakzugabe (11) unter Verbrennung dieses Brenngases (15) erfolgt.

11. Verfahren nach Anspruch 10, **dadurch gekennzeichnet, dass** eine erste Zufuhr eines Brenngases oder eines die Temperatur der Reaktion am Katalysator beeinflussenden Mediums stromaufwärts der Zugabe von Ammoniak (11) und eine weitere Zufuhr eines Brenngases oder eines die Temperatur der Reaktion am Katalysator beeinflussenden Mediums stromabwärts der Zugabe von Ammoniak (11) vorgesehen ist.

12. Verfahren nach einem der Ansprüche 2 bis 11, **dadurch gekennzeichnet, dass** ein indirektes Heizen oder Kühlen der Luft vor der Zugabe von Ammoniak (11) mittels eines ersten indirekten Wärmeüberträgers (16) vorgesehen ist und/oder ein indirektes Heizen oder Kühlen des Ammoniak-Luft-Mischgases nach der Zugabe von Ammoniak (11) mittels eines zweiten Wärmeüberträgers (18) vorgesehen ist.

13. Verfahren nach einem der Ansprüche 1 bis 12, **dadurch gekennzeichnet, dass** die katalytische Oxidation in einer Anlage umfassend einen Prozessluftverdichter erfolgt (12) und eine Änderung der Temperatur der Verbrennungsluft über die Änderung mindestens eines Einstellungsparameters des Prozessluftverdichters vorgesehen ist, bevorzugt über eine Änderung der Einstellung der Schaufeln des Prozessluftverdichters.

14. Verfahren nach einem der Ansprüche 1 bis 15, **dadurch gekennzeichnet, dass** der Sollwert der Temperatur des Katalysatornetzes in Abhängigkeit von wenigstens einem Modellparameter ermittelt wird, wobei insbesondere die NH₃-Konzentration und/oder die Anlagenlast und/oder der Brennerdruck als Modellparameter gewählt wird, wobei ein Regelkreis verwendet wird, um die Zufuhrmenge des Heiz- oder Kühlmediums einzustellen und/oder die Einstellung des Prozessluftverdichters (12) zu justieren.

15. Verfahren nach Anspruch 14, **dadurch gekennzeichnet, dass** eine Kaskadenregelung verwendet wird, wobei der Ausgang eines Temperaturreglers für die Temperatur des Katalysatornetzes den Sollwert für einen Durchflussregler des Heiz- und/oder Kühlmediums liefert.

16. Verfahren nach einem der Ansprüche 14 oder 15, **dadurch gekennzeichnet, dass** über Anlagendaten sowie theoretische Ansätze ein Modell erstellt wird für das Verhalten der Anlage in Bezug auf Variationen der Heizmittelmengen und/oder Kühlmittelmengen und/oder Änderungen der Einstellungen des Prozessluftverdichters (12), wobei eine feed-forward Regelung mit feedback trim verwendet wird.

17. Einrichtung zur Durchführung eines Verfahrens zur katalytischen Oxidation von Ammoniakgas mittels eines sauerstoffhaltigen Gases, insbesondere mittels Luft, in Gegenwart eines Katalysators zu Stickstoffmonoxid, vorzugsweise zur Durchführung des Verfahrens gemäß einem der Ansprüche 1 bis 16, **dadurch gekennzeichnet, dass** diese Einrichtung Mittel zur Regelung der Temperatur eines Ammoniak-Luft-Mischgases vor dem Kontakt mit dem Katalysator umfasst, dass diese wenigstens eine Heizvorrichtung (16, 18) und/oder wenigstens eine Kühlvorrichtung für die Luft und/oder das Ammoniak-Luft-Mischgas stromaufwärts des Katalysators umfasst und dass diese Mittel (15, 20) für eine Zufuhr eines Brenngases, insbesondere für eine Zufuhr von Wasserstoff als Brenngas, zur Erhöhung der Brennertemperatur und Erwärmung der Luft und/oder des Ammoniak-Luft-Mischgases vor dem Kontakt mit dem Katalysator umfassen.

18. Einrichtung nach Anspruch 17, **dadurch gekennzeichnet, dass** als Heizvorrichtung eine in einer Primärluftleitung (14) installierte Heizung (16) vorgesehen ist, zur indirekten Beheizung der Prozessl uft.

19. Einrichtung nach einem der Ansprüche 17 bis 18, **dadurch gekennzeichnet, dass** diese einen Prozessluftverdichter (12) mit einem Zwischenkühler umfasst, wobei ein geregelter prozessluftseitiger Bypass um den Zwischenkühler zur Einstellung der Austrittstemperatur der aus dem Prozessluftverdichter austretenden Luft vorgesehen ist.

20. Einrichtung nach einem der Ansprüche 17 bis 19, **dadurch gekennzeichnet, dass** diese Mittel für eine Aufheizung oder Abkühlung des Ammoniak-Luft-Mischgases durch Beimischung von Wasserdampf stromaufwärts und/oder stromabwärts des Prozessluftverdichters umfasst.

21. Einrichtung nach einem der Ansprüche 17 bis 20, **dadurch gekennzeichnet, dass** diese wenigstens einen Regelkreis umfasst, um die Zufuhrmenge des Heiz- und/oder Kühlmediums zu der Heiz- oder Kühlvorrichtung einzustellen und/oder die Einstellung des Prozessluftverdichters zu justieren.

22. Einrichtung nach Anspruch 21, **dadurch gekennzeichnet, dass** der Regelkreis eine Kaskadenregelung umfasst, wobei ein Temperaturregler zur Erfassung der Temperatur des Katalysatornetzes vorgesehen ist, welcher in Wirkverbindung steht mit einem Durchflussregler für das Heiz- und/oder Kühlmedium.

## Claims

1. A process for the catalytic oxidation of ammonia gas by means of an oxygen-containing gas, in particular by means of air, in the presence of a catalyst to form nitrogen monoxide in an oxidation reactor, **wherein** a control of the reaction temperature at the catalyst to an optimum value with respect to the nitrogen monoxide selectivity of the reaction is provided, this control being effected by means of measures upstream of the oxidation reactor, **characterized in that** the air and/or the ammonia/air mixed gas are/is directly heated or cooled before coming into contact with the catalyst, and **in that** an introduction of a fuel gas (20, 22) or a medium influencing the temperature of the reaction at the catalyst is provided downstream of the addition of ammonia (11), the combustion of this fuel gas (20, 22) taking place at the catalyst in the ammonia burner (10).

2. The process according to claim 2, **characterized in that** the air and/or the ammonia/air mixed gas are indirectly heated or cooled before coming into contact with the catalyst.

3. The process according to claim 2, **characterized in that** indirect heating of the air and/or the ammonia/air mixed gas by means of steam or another heat transfer medium is provided, in particular by means of residual gas and/or secondary air and/or electric current.

4. The process according to one of claims 2 or 3, **characterized in that** the catalytic oxidation is carried out in a plant comprising a process air compressor with an intermediate cooler, wherein a controlled process air-side bypass around the intermediate cooler is provided to set the exit temperature of the air exiting from the process air compressor.

5. The process according to claim 4, **characterized in that** the catalytic oxidation is carried out in a plant comprising a process air compressor (12) and the process air stream is mixed with at least one hot medium and/or at least one cold medium upstream or downstream of the process air compressor.

6. The process according to claim 5, **characterized in that** demineralized water and/or liquid nitrogen and/or cold water, in particular from NH₃ vaporization, is used as the cold medium.

7. The process according to one of claims 5 or 6, **characterized in that** mixing of the hot or cold medium with the total air stream or only with the primary air is provided.

8. The process according to one of the claims 5 to 7, **characterized in that** heating is provided by admixing steam upstream of the process air compressor (12).

9. The process according to one of the claims 5 to 8, **characterized in that** heating or cooling of the ammonia/air mixed gas by admixing steam downstream of the process air compressor (12) is provided.

10. The process according to one of the claims 4 to 9, **characterized in that** heating of the air and/or the ammonia/air mixed gas is carried out before coming into contact with the catalyst, wherein the use of a fuel gas (15, 21), in particular the use of hydrogen as the fuel gas, is provided for increasing the burner temperature, the introduction of a fuel gas (15, 21) into the air stream being effected in the region of the conduit (14) upstream of the ammonia addition (11) with combustion of this fuel gas (15).

11. The process according to claim 10, **characterized in that** a first introduction of a fuel gas or a medium influencing the temperature of the reaction at the catalyst is provided upstream of the addition of ammonia (11) and a further introduction of a fuel gas or a medium influencing the temperature of the reaction at the catalyst is provided downstream of the addition of ammonia (11).

12. The process according to any one of claims 2 to 11, **characterized in that** indirect heating or cooling of the air by means of a first indirect heat exchanger (16) before the addition of ammonia (11) and/or indirect heating or cooling of the ammonia/air mixed gas by means of a second heat exchanger (18) is provided after the addition of ammonia (11).

13. The process according to one of the claims 1 to 12, **characterized in that** the catalytic oxidation is carried out in a plant comprising a process air compressor (12) and a change in the temperature of the combustion air is provided by changing at least one setting parameter of the process air compressor, preferably by changing the setting of the blades of the process air compressor.

14. The process according to one of the claims 1 to 13, **characterized in that** the intended value of the temperature of the catalyst gauze is determined as a function of at least one modeling parameter with, in particular, the NH₃ concentration and/or the plant load and/or the burner pressure being selected as modeling parameter, wherein a control circuit is used to set the supply amount of the heating or cooling medium to be supplied and/or to adjust the setting of the process air compressor (12).

15. The process according to claim 14, **characterized in that** a cascade control is used, wherein the output of a temperature controller for the temperature of the catalyst gauze provides the intended value for a flow controller for the heating and/or cooling medium.

16. The process according to one of the claims 14 or 15, **characterized in that** a model is set up for the behavior of the plant in respect of variations in the amounts of heating medium and/or cooling medium and/or changes in the settings of the process air compressor (12) using plant data and also theoretical approaches, wherein a feed-forward control with feedback trim is used.

17. An apparatus for carrying out a process for the catalytic oxidation of ammonia gas by means of an oxygen-containing gas, in particular by means of air, in the presence of a catalyst to form nitrogen monoxide, preferably for carrying out the process according to one of claims 1 to 16, **characterized in that** said apparatus comprises means for controlling the temperature of a ammonia/air mixed gas before coming into contact with the catalyst, that it comprises at least one heating device (16, 18) and/or at least one cooling device for the air and/or the ammonia-/air mixed gas upstream of the catalyst and that these comprise means (15, 20) for an introduction of a fuel gas, in particular for an introduction of hydrogen as a fuel gas, for increasing the burner temperature and heating the air and/or the ammonia-air mixed gas before coming into contact with the catalyst.

18. The apparatus according to claim 17, **characterized in that** a heater (16) installed in a primary air conduit (14) is provided as heating device for indirect heating of the process air.

19. The apparatus according to one of the claims 17 to 18, **characterized in that** it comprises a process air compressor (12) with an intermediate cooler, wherein a controlled process air-side bypass around the intermediate cooler is provided for setting the exit temperature of the air exiting from the process air compressor.

20. The apparatus according to any one of claims 17 to 19, **characterized in that** it comprises means for heating or cooling the ammonia/air mixed gas by admixing steam upstream and/or downstream of the process air compressor.

21. The apparatus according to any one of claims 17 to 20, **characterized in that** it comprises at least one control circuit for setting the amount of the heating and/or cooling medium fed into the heating or cooling device and/or for adjusting the setting of the process air compressor.

22. The apparatus according to claim 21, **characterized in that** the control circuit comprises a cascade control, wherein a temperature controller is provided for detecting the temperature of the catalyst gauze, which is operatively connected to a flow controller for the heating and/or cooling medium.

## Revendications

1. Procédé d'oxydation catalytique de gaz ammoniac au moyen d'un gaz contenant de l'oxygène, en particulier au moyen d'air, en présence d'un catalyseur, en monoxyde d'azote dans un réacteur d'oxydation, une régulation de la température de réaction au niveau du catalyseur **étant** prévue à une valeur optimale eu égard à la sélectivité de la réaction en monoxyde d'azote, cette régulation s'effectuant par des mesures en amont du réacteur d'oxydation, **caractérisé en ce que** l'air et/ou le gaz mixte ammoniac/air sont directement chauffés ou refroidis avant d'être mis en contact avec le catalyseur et **en ce qu'**il est prévu une amenée d'un gaz combustible (20, 22) ou d'un fluide influençant la température de la réaction au niveau du catalyseur en aval de l'ajout d'ammoniac (11), la combustion de ce gaz combustible (20, 22) au niveau du catalyseur étant réalisée dans le brûleur à ammoniac (10).

2. Procédé selon la revendication 2, **caractérisé en ce que** l'air et/ou le gaz mixte ammoniac/air sont chauffés ou refroidis indirectement avant d'être mis en contact avec le catalyseur.

3. Procédé selon la revendication 2, **caractérisé en ce qu' il** est prévu un chauffage indirect de l'air et/ou du gaz mixte ammoniac/air au moyen de vapeur ou d'un autre vecteur de chaleur, en particulier au moyen de gaz résiduel et/ou d'air secondaire et/ou de courant électrique.

4. Procédé selon l'une des revendications 2 ou 3, **caractérisé en ce que** l'oxydation catalytique est réalisée dans une installation comprenant un compresseur d'air de procédé avec un refroidisseur intermédiaire, une dérivation régulée côté air de procédé étant prévue autour du refroidisseur intermédiaire pour régler la température de sortie de l'air sortant du compresseur d'air de procédé.

5. Procédé selon la revendication 4, **caractérisé en ce que** l'oxydation catalytique a lieu dans une installation comprenant un compresseur d'air de traitement (12) et **en ce que** le flux d'air de traitement est mélangé avant ou après le compresseur d'air de traitement avec au moins un fluide chaud et/ou au moins un fluide froid.

6. Procédé selon la revendication 5, **caractérisé en ce que** l'on utilise comme fluide froid de l'eau déminéralisée et/ou de l'azote liquide et/ou de l'eau froide, notamment issue de l'évaporation de _{NH3}.

7. Procédé selon l'une des revendications 5 ou 6, **caractérisé en ce qu'**il est prévu un mélange du fluide chaud ou du fluide froid avec l'ensemble du flux d'air ou uniquement avec l'air primaire.

8. Procédé selon l'une des revendications 5 à 7, **caractérisé en ce qu'**il est prévu un réchauffage par ajout de vapeur d'eau en amont du compresseur d'air de process (12).

9. Procédé selon l'une des revendications 5 à 8, **caractérisé en ce qu'**il est prévu un chauffage ou un refroidissement du gaz mixte ammoniac/air par mélange de vapeur d'eau en aval du compresseur d'air de procédé (12).

10. Procédé selon l'une des revendications 4 à 9, **caractérisé en ce qu'**un chauffage de l'air et/ou du gaz mixte ammoniac/air est réalisé avant le contact avec le catalyseur, l'utilisation d'un gaz combustible (15, 21), notamment l'utilisation d'hydrogène comme gaz combustible, étant prévue pour augmenter la température du brûleur, l'introduction d'un gaz combustible (15, 21) dans le flux d'air au niveau de la conduite (14) en amont de l'ajout d'ammoniac (11) étant réalisée avec combustion de ce gaz combustible (15).

11. Procédé selon la revendication 10, **caractérisé en ce qu'**il est prévu une première alimentation d'un gaz combustible ou d'un fluide influençant la température de la réaction au niveau du catalyseur en amont de l'ajout d'ammoniac (11) et une autre alimentation d'un gaz combustible ou d'un fluide influençant la température de la réaction au niveau du catalyseur en aval de l'ajout d'ammoniac (11).

12. Procédé selon l'une des revendications 2 à 11, **caractérisé en ce qu'**il est prévu un chauffage ou un refroidissement indirect de l'air avant l'ajout d'ammoniac (11) au moyen d'un premier échangeur de chaleur indirect (16) et/ou un chauffage ou un refroidissement indirect du gaz mixte ammoniac/air après l'ajout d'ammoniac (11) au moyen d'un deuxième échangeur de chaleur (18).

13. Procédé selon l'une des revendications 1 à 12, **caractérisé en ce que** l'oxydation catalytique est réalisée dans une installation comprenant un compresseur d'air de traitement (12) et **en ce qu'**une modification de la température de l'air de combustion est prévue par la modification d'au moins un paramètre de réglage du compresseur d'air de traitement, de préférence par une modification du réglage des pales du compresseur d'air de traitement.

14. Procédé selon l'une des revendications 1 à 13, **caractérisé en ce que** la valeur de consigne de la température du réseau catalytique est déterminée en fonction d'au moins un paramètre de modèle, la concentration en NH₃ et/ou la charge de l'installation et/ou la pression du brûleur étant notamment choisies comme paramètres de modèle, un circuit de régulation étant utilisé pour régler le débit d'alimentation du fluide de chauffage ou de refroidissement et/ou pour ajuster le réglage du compresseur d'air de procédé (12).

15. Procédé selon la revendication 14, **caractérisé en ce que** l'on utilise une régulation en cascade, la sortie d'un régulateur de température du réseau catalytique fournissant la consigne à un régulateur de débit du fluide de chauffage et/ou de refroidissement.

16. Procédé selon l'une des revendications 14 ou 15, **caractérisé en ce que** l'on modélise, à partir des données de l'installation ainsi que d'approches théoriques, le comportement de l'installation par rapport à des variations des quantités de fluide de chauffage et/ou de fluide de refroidissement et/ou des modifications des réglages du compresseur d'air de process (12), en utilisant une régulation feed-forward avec feedback trim.

17. Installation pour la mise en oeuvre d'un procédé d'oxydation catalytique de l'ammoniac gazeux en monoxyde d'azote au moyen d'un gaz contenant de l'oxygène, notamment au moyen d'air, en présence d'un catalyseur, de préférence pour la mise en oeuvre du procédé selon l'une des revendications 1 à 16, **caractérisée en ce que** cette installation comprend des moyens de régulation de la température d'un gaz mixte ammoniac/air avant le contact avec le catalyseur, **en ce que** celui-ci comprend au moins un dispositif de chauffage (16, 18) et/ou au moins un dispositif de refroidissement de l'air et/ou du gaz mixte ammoniac/air en amont du catalyseur et **en ce que** ceux-ci comprennent des moyens (15, 20) pour une alimentation en gaz combustible, notamment pour une alimentation en hydrogène comme gaz combustible, pour augmenter la température du brûleur et chauffer l'air et/ou le gaz mixte ammoniac/air avant le contact avec le catalyseur.

18. Installation selon la revendication 17, **caractérisé en ce qu'**il est prévu comme dispositif de chauffage un chauffage (16) installé dans une conduite d'air primaire (14), pour le chauffage indirect de l'air de traitement.

19. Installation selon l'une des revendications 17 à 18, **caractérisée en ce qu'**elle comprend un compresseur d'air de process (12) avec un refroidisseur intermédiaire, un by-pass régulé côté air de process étant prévu autour du refroidisseur intermédiaire pour régler la température de sortie de l'air sortant du compresseur d'air de process.

20. Installation selon l'une des revendications 17 à 19, **caractérisée en ce qu'**elle comprend des moyens de chauffage ou de refroidissement du gaz mixte ammoniac/air par ajout de vapeur d'eau en amont et/ou en aval du compresseur d'air de process.

21. Installation selon l'une des revendications 17 à 20, **caractérisée en ce qu'**elle comprend au moins un circuit de régulation pour ajuster le débit d'alimentation du fluide de chauffage et/ou de refroidissement vers le dispositif de chauffage ou de refroidissement et/ou pour ajuster le réglage du compresseur d'air de process.

22. Installation selon la revendication 21, **caractérisé en ce que** le circuit de régulation comprend une régulation en cascade, un régulateur de température étant prévu pour détecter la température du réseau de catalyseurs, lequel est en liaison active avec un régulateur de débit pour le fluide de chauffage et/ou de refroidissement.
